# FASCICULE DE BREVET EUROPEEN

(11) **EP 3 356 664 B1**
(45) Date de publication et mention de la délivrance du brevet: **21.08.2019**
(21) Numéro de dépôt: 16777716.8
(22) Date de dépôt: 08.09.2016
(51) Int. Cl.: F02D 33/02, F02D 41/12, F02D 23/02, F02D 41/04, F02B 37/12, F02B 37/18, F02D 41/10

(54) **PROCEDE DE COMMANDE EN FERMETURE FORCEE AU MOINS PARTIELLE D'UNE SOUPAPE DE DECHARGE D'UN MOTEUR TURBOCOMPRESSE**
STEUERVERFAHREN ZUR MINDESTENS TEILWEISEN, ERZWUNGENEN SCHLIESSUNG EINES WASTEGATE-VENTILS EINES TURBOMOTORS
METHOD FOR CONTROLLING AN AT LEAST PARTIAL, FORCED CLOSURE OF A WASTE GATE VALVE OF A TURBOCHARGED ENGINE

(30) Priorité: 29.09.2015 FR 1559180
(43) Date de publication de la demande: 08.08.2018
(73) Titulaire: PSA AUTOMOBILES S.A., 78300 Poissy (FR)
(72) Inventeur: ACHIR, Ali, 78955 Carrieres Sous Poissy (FR); TRAVERT, Samuel, 92500 Rueil Malmaison (FR)
(86) Numéro de dépôt international: PCT/FR2016/052236
(87) Numéro de publication internationale: WO 2017/055700

(56) Documents cités:
- WO-A1-2008/140401
- US-A1- 2014 137 552
- US-A1- 2015 198 102
- US-A1- 2015 240 708

## Description

La présente invention porte sur un ensemble moteur pour un véhicule automobile comprenant un moteur à combustion interne associé avec au moins un turbocompresseur présentant une soupape de décharge. Plus particulièrement, la présente invention concerne un procédé de commande en fermeture forcée au moins partielle d'une soupape de décharge d'un turbocompresseur d'un moteur thermique d'un véhicule automobile après détection d'une situation de conduite pour laquelle une telle fermeture est souhaitable afin de conserver l'énergie des gaz d'échappement que récupère le turbocompresseur.

Cette situation de conduite se passe fréquemment lorsque que le conducteur lève son pied de la pédale d'accélérateur provoquant une décélération du véhicule automobile. Une étape de détection du procédé de commande selon la présente invention permet de différencier des levers de pied différents de la pédale d'accélérateur et, pour certaines classes de lever de pied identifiées, de maintenir la soupape de décharge du turbocompresseur au moins partiellement fermée tant que certaines conditions de fonctionnement du moteur perdurent.

Un moteur turbocompressé comprend une turbine et un compresseur. La turbine est disposée en aval d'un collecteur d'échappement dans le conduit d'échappement tandis que le compresseur est disposé en amont du collecteur d'admission d'air au moteur. La turbine comprend une roue de turbine récupérant au moins partiellement une énergie cinétique créée dans les gaz d'échappement le traversant, l'organe rotatif ou roue de la turbine étant mis en rotation par les gaz d'échappement quittant le collecteur d'échappement. La turbine entraîne le compresseur en étant solidaire de celui-ci par un axe, le compresseur étant traversé par de l'air frais destiné à alimenter en air le moteur, air que le compresseur comprime.

Pour la décharge et/ou le contrôle de la puissance de la turbine, il est prévu de munir le turbocompresseur d'une soupape de décharge. Cela permet notamment d'éviter le phénomène de pompage du moteur consistant essentiellement à un retour des gaz chauds vers l'entrée d'air d'admission.

Pour un moteur turbocompressé classique, une soupape de décharge qui peut être interne ou externe à la turbine sert à limiter la pression des gaz d'échappement sur la roue de la turbine du turbocompresseur en ouvrant une dérivation des gaz d'échappement afin qu'ils ne passent plus par la turbine et sa roue. Une limitation de la vitesse de la roue de la turbine est donc obtenue, ce qui limite aussi la vitesse de rotation de la roue prévue dans le compresseur en étant solidaire de la roue de la turbine, d'où aussi une limitation de la compression de l'air d'admission.

Lors des levers de pied du conducteur de la pédale d'accélération, la soupape de décharge s'ouvre naturellement. Dans le cas où le conducteur réaccélère aussitôt, il faut alors refermer la soupape de décharge et apporter de nouveau l'énergie nécessaire pour relancer le turbocompresseur, ce qui dégrade fortement la performance et l'agrément du moteur.

Le document FR-A-2 886 677 décrit un procédé de commande d'un moteur à combustion interne associé avec un turbocompresseur consistant à détecter une situation de fonctionnement du véhicule, par exemple un lever de pied, et de pré-positionner le turbocompresseur en une position intermédiaire d'alimentation pendant un certain temps avant de le positionner sur sa position définitive. Ce temps de mise en position intermédiaire dépend du taux de détente du compresseur et du régime moteur.

Le document WO 2008/140401 A1 divulgue un procédé de commande en fermeture forcée au moins partielle d'une turbine à géométrie variable d'un turbocompresseur, dans lequel il est détecté une réduction en couple requise, avec annulation de la commande de fermeture forcée au moins partielle après une durée respective écoulée à partir de la réduction en couple requise sans reprise d'un enfoncement de la pédale pour une accélération (en attente d'un changement de vitesse).

Le but recherché est d'empêcher le compresseur de fonctionner dans une zone de pompage. L'inconvénient de cette solution est que si le conducteur réaccélère avant la fin de la temporisation en une position intermédiaire, la commande reste bloquée en boucle ouverte. Ce document ne traite pas de la conservation de l'énergie des gaz d'échappement dans un turbocompresseur et ne donne aucune indication comment une telle conservation pourrait se faire.

Par conséquent, le problème à la base de l'invention est, lors d'un lever de pied du conducteur de la pédale d'accélérateur d'un moteur avec turbocompresseur, d'identifier ce lever de pied comme étant favorable pour procéder à une conservation de l'énergie des gaz d'échappement passant par le turbocompresseur initialement perdu lors d'un tel lever de pied et, si c'est le cas, de mettre en oeuvre une commande d'une soupape de décharge du turbocompresseur permettant cette conservation d'énergie.

Pour atteindre cet objectif, il est prévu, selon l'invention, un procédé de commande en fermeture forcée au moins partielle d'une soupape de décharge d'un turbocompresseur d'un moteur thermique d'un véhicule automobile, dans lequel il détecté des levers de pied du conducteur sur la pédale d'accélérateur classifiés entre, d'une part, des levers partiels inférieurs à un seuil de relâchement prédéterminé de la pédale pour lesquels la commande n'est pas effectuée et, d'autre part, des levers partiels supérieurs audit seuil et des levers complets pour lesquels la commande est effectuée, avec :
- pour les levers partiels supérieurs audit seuil de relâchement et les levers complets, annulation de la commande de fermeture forcée au moins partielle après une durée respective écoulée à partir de chaque lever partiel ou complet sans reprise d'un enfoncement de la pédale pour une accélération et,
- pour des levers complets suivis directement d'un enfoncement de la pédale, annulation de la commande de fermeture forcée au moins partielle à un instant pour lequel une consigne de pression de suralimentation est supérieure à un seuil de consigne ou pour lequel une différence entre la consigne de pression entre deux instants successifs de mesure est supérieure à un seuil de pression prédéterminé et calibrable.

L'effet technique est d'obtenir grâce à la détermination par détection et classification de la situation de vie où le conducteur effectue un lever de pied suffisamment franc de la pédale d'accélération une fermeture forcée au moins partielle de la soupape de décharge qui soit appropriée aux conditions de fonctionnement du turbocompresseur. La soupape de décharge pouvait être initialement fermée, dans ce cas, la commande correspond à un maintien en fermeture partielle de la soupape de décharge mais aussi pouvait être initialement ouverte, avec la commande correspondant à une commande en fermeture partielle de la soupape de décharge.

Ceci permet de conserver le maximum d'une énergie récupérée par la turbine du turbocompresseur. Cette énergie sera alors réutilisée à la réaccélération qui suit immédiatement. Ceci permet d'améliorer l'agrément de conduite en réduisant le temps de réponse de l'ensemble actionneur et turbocompresseur. Le procédé de commande prévoit l'annulation de la commande en fermeture forcée si le conducteur ne réaccélère pas de suite ou en prenant en compte le suivi de la consigne de pression de suralimentation. Dans ce cas, l'énergie accumulée sera alors déviée en rouvrant la soupape de décharge.

Ainsi la présente invention propose de forcer la fermeture au moins partielle de la soupape de décharge afin de conserver au maximum l'énergie des gaz d'échappement et de gagner du temps sur la durée de réponse de l'actionneur de la soupape de décharge. Conformément à l'invention, cette action se fait d'une manière non intrusive et sécuritaire afin de ne pas perturber le bon fonctionnement du moteur et de ne pas altérer l'agrément de conduite du véhicule.

Avantageusement, la commande de la fermeture forcée au moins partielle de la soupape de décharge s'effectue avec un taux de fermeture de la soupape de décharge qui est fonction de la consigne de pression de suralimentation et d'un débit du compresseur représentatifs d'un fonctionnement du compresseur hors d'une zone de pompage.

Sans cela, avec une fermeture forcée complète de la soupape de décharge, dans certaines conditions de fonctionnement du moteur thermique et notamment du champ du compresseur, il y avait un risque de faire fonctionner un peu plus le compresseur dans une zone de pompage correspondant à une forte consigne de pression de suralimentation et un faible débit dans le compresseur entraînant ainsi une sur-utilisation d'une vanne de débordement présente en association avec le turbocompresseur, vanne aussi connue sous l'appellation anglo-saxonne de « dump valve ». Une telle vanne de débordement est située entre la sortie d'air du compresseur et un papillon des gaz avant un collecteur d'admission d'air du moteur thermique.

Avantageusement, pour l'identification et la classification des levers de pied selon le seuil de relâchement prédéterminé d'enfoncement de la pédale d'accélérateur, il est détecté un lever de pied complet quand la pédale d'accélérateur n'est plus enfoncée et, quand la pédale d'accélérateur est partiellement enfoncée et que la valeur absolue d'une différence d'enfoncement de la pédale d'accélérateur entre deux instants successifs de mesure est supérieure au seuil de relâchement prédéterminé, il est détecté un lever de pied partiel pour lequel la commande de fermeture forcée au moins partielle est effectuée. Il est ainsi possible de différencier un lever de pied complet d'un lever de pied partiel mais surtout un lever de pied partiel n'entrant pas dans le cadre d'utilisation du procédé car trop peu important d'un lever de pied partiel pouvant permettre une mise en oeuvre du procédé selon l'invention.

Avantageusement, le seuil de relâchement prédéterminé d'enfoncement est au voisinage de 2 à 5% de relâchement entre deux instants successifs de mesure.

Dans un mode de réalisation préférentielle de l'invention, pour un lever de pied partiel supérieur audit seuil de relâchement, la commande de fermeture au moins partielle de la soupape de décharge est annulée quand, à un instant après la fin d'un premier seuil de durée, une consigne de pression de suralimentation n'est pas descendue au-dessous d'un seuil de consigne de pression.

Similairement, pour un lever de pied complet, la commande de fermeture au moins partielle de la soupape de décharge est annulée quand, à un instant après la fin d'un deuxième seuil de durée prédéterminé, la consigne de pression de suralimentation n'est pas descendue au-dessous d'un seuil de consigne de pression, le deuxième seuil de durée étant supérieur au premier seuil de durée.

Dans un mode de réalisation préférentielle particulièrement avantageux de la présente invention, pour un lever de pied complet, il est sauvegardé une dernière valeur d'une consigne de pression de suralimentation et, si à la prochaine accélération à un instant, il est demandé une consigne de pression supérieure à la dernière valeur de la consigne de pression de suralimentation, alors la commande de fermeture au moins partielle de la soupape de décharge est annulée.

Avantageusement, pour un lever de pied complet, il est établi une différence entre les consignes de pression de suralimentation respectivement à des instants successifs de mesure et si cette différence est supérieure à un seuil de pression prédéterminé et calibrable après écoulement d'un troisième seuil de durée alors la commande de fermeture au moins partielle de la soupape de décharge est annulée, le troisième seuil de durée étant choisi de telle sorte que la demande d'une consigne de pression supérieure à la dernière valeur de la consigne de pression de suralimentation soit privilégiée si elle a lieu.

L'invention concerne aussi un dispositif pour la mise en oeuvre d'un procédé de commande tel que précédemment décrit, lequel dispositif comprend un module de détection des levers de pied du conducteur de la pédale d'accélérateur avec classification des différents levers de pied détectés, le module de détection étant relié à un capteur de position de la pédale d'accélérateur pour cette détection, un module de détermination de différentes situations de conduite du véhicule et un module de gestion de demandes de commande de fermeture forcée au moins partielle de la soupape de décharge suite à un type de lever de pied du conducteur, le module de gestion arbitrant entre les différentes situations de conduite du véhicule pour la commande ou l'annulation de la fermeture forcée, le module de gestion comprenant des moyens de mémorisation au moins du seuil de relâchement d'enfoncement de la pédale d'accélérateur et d'un seuil de consigne pour la consigne de suralimentation.

L'invention concerne aussi un ensemble de pilotage d'au moins un turbocompresseur présentant un régulateur de suralimentation pilotant la soupape de décharge, caractérisé en ce qu'il comprend un dispositif pour la mise en oeuvre d'un procédé de commande tel que précédemment décrit, le module de gestion du dispositif présentant des moyens de suspension du pilotage du régulateur de suralimentation quand il commande une fermeture forcée au moins partielle de la soupape de décharge et des moyens de rétablissement du pilotage par le régulateur de suralimentation quand il commande une annulation de la fermeture forcée au moins partielle de la soupape de décharge.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un dispositif pour la mise en oeuvre d'un procédé de commande en fermeture forcée au moins partielle d'une soupape de décharge d'un turbocompresseur d'un moteur thermique d'un véhicule automobile selon la présente invention,
- la figure 2 est une représentation schématique d'un mode de détection du relâchement de l'enfoncement d'une pédale d'accélérateur, ce mode de détection pouvant être mis en oeuvre dans le cadre du procédé selon la présente invention,
- la figure 3 est une représentation schématique d'un mode de réalisation de la détermination d'un lever de pied partiel soit non exploitable ou soit entrant dans le cadre de mise en oeuvre du procédé selon la présente invention,
- la figure 4 est une représentation schématique de différentes situations de vie illustrant un lever partiel et des levers complets suivis ou non d'une accélération, ces situations de vie entrant dans le cadre de mise en oeuvre du procédé selon la présente invention, ces différentes situations de vie étant illustrées par une courbe donnant la consigne de pression de suralimentation en fonction du temps,
- la figure 5 est une représentation schématique d'un mode de réalisation du procédé de commande selon la présente invention dans le cas d'un lever partiel de pied,
- la figure 6 est une représentation schématique de la courbe donnant la consigne de pression de suralimentation en fonction du temps dans le cas d'un lever partiel illustré à la figure 5,
- la figure 7 est une représentation schématique d'un mode de réalisation du procédé de commande selon la présente invention dans le cas d'un lever complet de pied suivi d'une accélération faible,
- la figure 8 est une représentation schématique de la courbe donnant la consigne de pression de suralimentation en fonction du temps dans le cas d'un lever complet de pied suivi d'une accélération faible illustré à la figure 7,
- la figure 9 est une représentation schématique d'un mode de réalisation du procédé de commande selon la présente invention dans le cas d'un lever complet de pied suivi d'une accélération forte,
- la figure 10 est une représentation schématique de la courbe donnant la consigne de pression de suralimentation en fonction du temps dans le cas du lever complet de pied suivi d'une accélération forte illustré à la figure 9,
- la figure 11 est une représentation schématique du module de gestion du dispositif pour la mise en oeuvre d'un procédé de commande selon la présente invention montré à la figure 1,
- la figure 12 est une représentation schématique de la courbe donnant la consigne de pression de suralimentation en fonction du temps dans le cas d'un lever complet de pied suivi d'une accélération faible, dans un autre mode de réalisation que celui illustré à la figure 7.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Le but de la présente invention est, lors d'un lever de pied du conducteur sur la pédale d'accélération provoquant une décélération du véhicule automobile, ce lever étant identifié comme approprié pour la mise en oeuvre du procédé de commande d'une soupape de décharge selon la présente invention, de maintenir la soupape de décharge au moins partiellement fermée par une demande de fermeture forcée au moins partielle de la soupape de décharge, alors que celle-ci devrait s'ouvrir dans de telles conditions selon l'état de la technique.

Pour ce faire, le procédé de commande en fermeture forcée au moins partielle d'une soupape de décharge d'un turbocompresseur d'un moteur thermique d'un véhicule automobile effectue le maintien en fermeture au moins partielle de la soupape de décharge après détection et qualification d'une situation de conduite régnante comme étant appropriée à une telle fermeture. Le procédé de commande selon l'invention prend en compte trois étapes pour effectuer ce maintien en fermeture de la soupape de décharge.

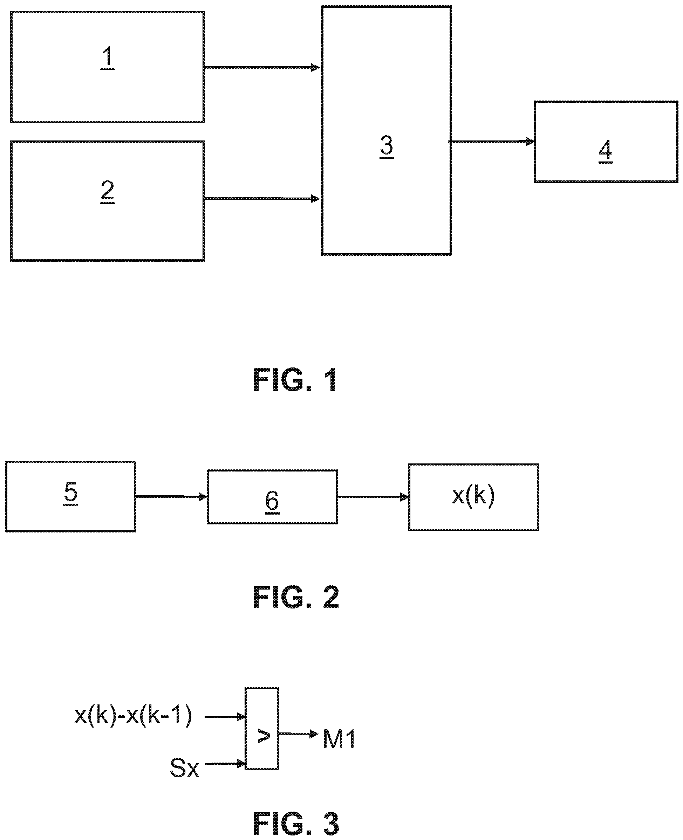

La première condition est une détection du lever de pied du conducteur de la pédale d'accélérateur. Conformément au procédé selon l'invention, il est détecté un lever de pied et il est établi une classification des levers de pied détectés. Ceci est montré à la figure 1 par le rectangle référencé 1 qui représente un module de détection des levers de pied du conducteur de la pédale d'accélérateur. Cette fonctionnalité permet de détecter la situation de vie de lever de pied afin de demander la fermeture forcée au moins partielle de la soupape de décharge.

Comme un maintien en fermeture forcée au moins partielle de la soupape de décharge n'est pas souhaitable pour tous les types de décélération, il est déterminé différentes situations de conduite dont certaines ne se prêtent pas pour forcer la fermeture de la soupape de décharge. Cette détermination de différentes situations dont certaines non appropriées à la fermeture forcée au moins partielle de la soupape de décharge est illustrée par le rectangle 2 à la figure 1, ceci correspondant à un module de détermination.

Cette fonctionnalité permet de détecter les situations de conduite où il ne faut pas forcer la fermeture au moins partielle de la soupape de décharge. La soupape de décharge sera alors pilotée, de manière usuelle, par un régulateur de suralimentation, alors le plus fréquemment en position d'ouverture, et répondra à la volonté du conducteur, un régulateur de suralimentation étant un élément connu d'un turbocompresseur.

Il est prévu un module de gestion de demandes de fermeture forcée au moins partielle de la soupape de décharge suite à un lever de pied du conducteur. Ce module de gestion est référencé 3 à la figure 1. Cette fonctionnalité permet d'arbitrer entre les différentes situations de conduite pour coordonner et sécuriser la demande de fermeture forcée au moins partielle de la soupape de décharge.

Enfin, si toutes les conditions sont réunies et après arbitrage du module de gestion 3 de demandes de fermeture forcée au moins partielle de la soupape de décharge, un module de commande 4 d'une demande de fermeture forcée au moins partielle de la soupape de décharge effectue cette demande. Le module de gestion 3 est apte aussi à annuler cette commande dans certaines conditions après avoir commandé une demande de fermeture forcée au moins partielle, ce qui est aussi fait par le module de commande 4.

Conformément au procédé selon l'invention, la classification des levers de pied se fait entre des levers partiels en différenciant deux levers partiels dont un peut faire l'objet d'une mise en oeuvre d'une commande forcée au moins partielle de la soupape de décharge, ainsi que des levers complets pouvant être suivis ou non d'une accélération immédiate.

Il est ainsi différencié des levers partiels inférieurs à un seuil de relâchement prédéterminé de la pédale pour lesquels la commande n'est pas effectuée et, d'autre part, des levers partiels supérieurs audit seuil ainsi que des levers complets pour lesquels la commande est effectuée. Un exemple d'une telle distinction sera donné en regard de la figure 3.

Ainsi, le module de gestion 3 peut commander la fermeture forcée au moins partielle de la soupape de décharge pour des levers de pied complets et des levers partiels ayant atteint un certain degré de relâchement de la pédale d'accélérateur.

Un lever complet avec ou sans accélération immédiate entre dans le cadre de situations de conduite appropriées à la fermeture forcée au moins partielle de la soupape de décharge car correspondant à une volonté ferme de décélération du conducteur. Par on différenciera dans le temps un lever complet avec accélération immédiate d'un lever complet sans accélération immédiate pour une annulation par le module de gestion 3 d'une demande de fermeture forcée au moins partielle de la soupape de décharge.

Un lever partiel d'une certaine ampleur au-dessus du seuil de relâchement peut aussi être favorable à une fermeture forcée au moins partielle de la soupape de décharge, étant donné qu'il est représentatif d'une volonté du conducteur de décélérer et qu'il sera vraisemblablement suivi rapidement d'une accélération.

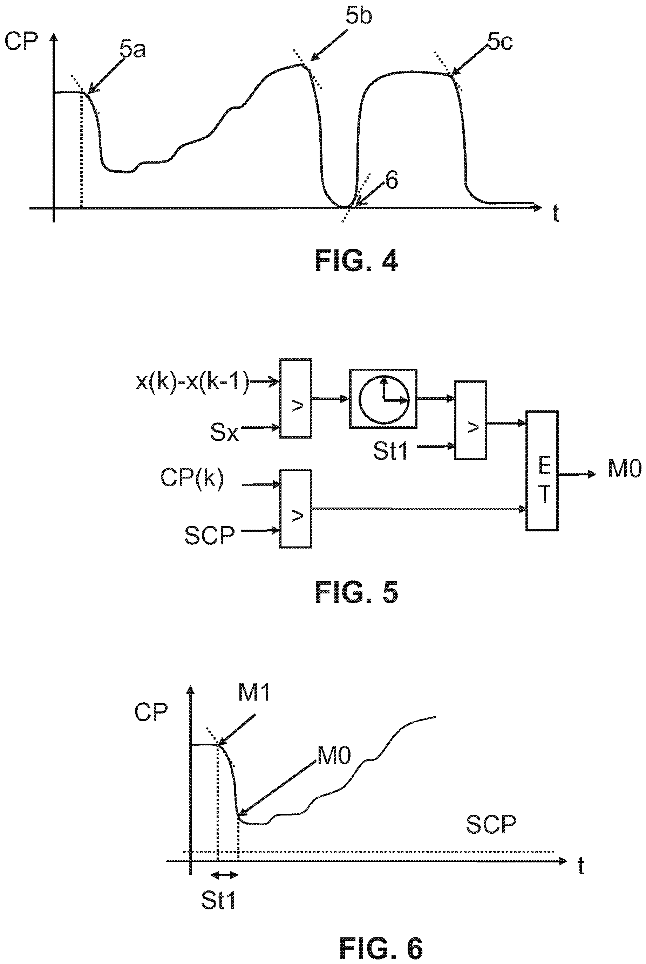

Selon la présente invention, pour les levers partiels supérieurs audit seuil de relâchement et les levers complets, il est procédé à l'annulation de la commande de fermeture forcée au moins partielle après une durée respective écoulée à partir de chaque lever partiel ou complet sans reprise d'un enfoncement de la pédale pour une accélération. Ceci sera mieux détaillé ultérieurement notamment en regard des figures 5, 8 et 11.

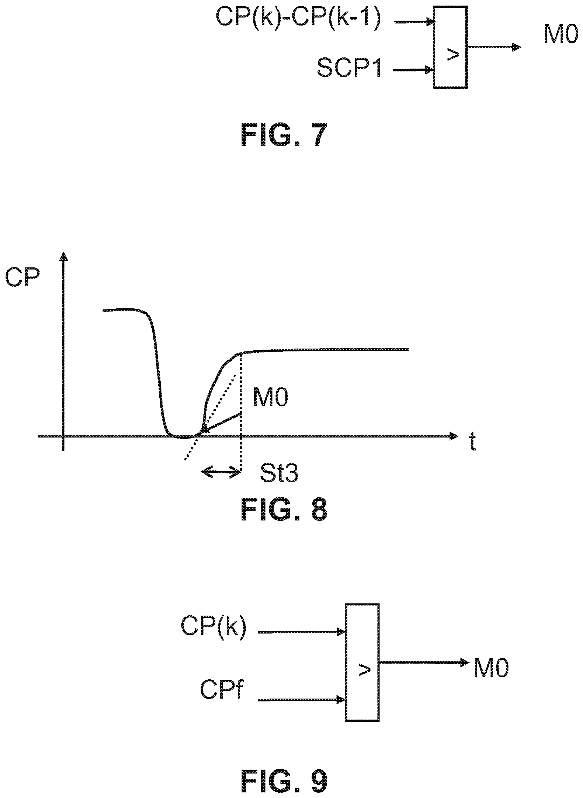

De même, pour des levers complets suivis directement d'un enfoncement de la pédale, il est procédé à une annulation de la commande de fermeture forcée au moins partielle à un instant pour lequel une consigne de pression de suralimentation est supérieure à un seuil de consigne ou pour lequel une différence entre la consigne de pression entre deux instants successifs de mesure est supérieure à un seuil de pression prédéterminé et calibrable. Ceci sera mieux détaillé ultérieurement notamment en regard des figures 7, 9 et 10.

Il convient d'éviter que la commande de la fermeture forcée au moins partielle de la soupape de décharge n'entraîne pas un fonctionnement du compresseur dans une zone de pompage. Pour cela, il est prévu que la commande de fermeture forcée puisse être seulement partielle. Dans ce cas, elle peut s'effectuer avec un taux de fermeture de la soupape de décharge qui est fonction de la consigne de pression de suralimentation et d'un débit du compresseur représentatifs d'un fonctionnement du compresseur hors d'une zone de pompage.

Pendant le roulage du véhicule, le conducteur réalise différentes accélérations et décélérations successives au moyen de la pression de son pied sur la pédale d'accélération. La détection du lever de pied du conducteur de la pédale d'accélérateur et même la pression du pied du conducteur sur la pédale d'accélérateur peuvent se faire grâce à un capteur de position intégré à la pédale.

L'information que délivre le capteur de position peut remonter à une unité de contrôle du moteur ou calculateur moteur qui peut aussi intégrer le module de gestion de demandes de fermeture forcée au moins partielle de la soupape de décharge et garder en mémoire les différentes situations de conduite dont certaines ne se prêtent pas pour forcer la fermeture au moins partielle de la soupape de décharge.

La mesure d'un capteur de position intégré à la pédale est montrée à la figure 2. Dans ce qui va suivre ainsi qu'aux figures, une demande de fermeture de la soupape de décharge sera référencée M1 tandis qu'une demande d'annulation de la fermeture de la soupape de décharge sera référencée M0.

La référence 5 illustre la pédale et le capteur intégré à la pédale est référencé 6. Il est mesuré un enfoncement en pourcentage x de la pédale d'accélérateur à un instant k. Ceci est connu de l'état de la technique indépendamment du procédé de commande selon la présente invention.

La figure 3 illustre une détection de lever de pied de la pédale d'accélérateur comme précédemment mentionné. La détection d'un lever de pied est réalisée en établissant la différence d'enfoncement de la pédale d'accélérateur x entre les instants k et k-1.

Si cette différence en valeur absolue est supérieure à un seuil de relâchement d'enfoncement calibrable Sx, ce qui est révélateur d'un lever de pied du conducteur sur la pédale d'accélérateur, il est alors envoyé une demande de fermeture au moins partielle de la soupape de décharge M1 au module de gestion de demandes de fermeture forcée au moins partielle de la soupape de décharge suite à un lever de pied du conducteur. Le seuil de relâchement Sx prédéterminé d'enfoncement peut par exemple être compris entre 2 à 5% de relâchement entre deux instants successifs de mesure, mais ceci n'est pas limitatif.

La figure 4 montre les situations de conduite pour lesquelles il est procédé à une détection d'un lever de pied. La courbe illustrée à cette figure donne la consigne de pression de suralimentation CP en fonction du temps t. La consigne de pression de suralimentation CP est représentative des accélérations et décélérations du véhicule.

Le premier lever de pied 5a visible à partir de la gauche est partiel mais au dessus du seuil d'enfoncement. Avec un tel lever de pied partiel 5a, le module de gestion 3 mentionné en regard de la figure 1 peut émettre une demande de fermeture de la soupape de décharge. Ce lever de pied partiel 5a est suivi d'une accélération, ce qui peut annuler la commande de fermeture forcée au moins partielle.

Le deuxième lever de pied au centre de la courbe est un lever de pied complet 5b suivi d'une accélération 6. C'est typiquement, le cas de conduite pour lequel il est intéressant de maintenir la soupape de décharge au moins partiellement fermée pour gagner en performance lors de l'accélération 6 qui suit immédiatement.

Le dernier cas à gauche est un lever de pied complet 5c non suivi directement d'une accélération 6. Pour ce cas de figure, la soupape de décharge peut être maintenue au moins partiellement fermée et les conditions d'annulation de la commande de fermeture peuvent être autres que dans les deux cas précédents.

La figure 5 illustre un cas de conduite suivant une détection d'un lever de pied partiel qui a été précédemment référencé 5a à la figure 4. Lorsque le lever de pied est partiel, il est possible de désactiver la fermeture forcée au moins partielle de la soupape de décharge dans certaines conditions s'y prêtant.

Pour ce faire, on déclenche un compteur suite à la détection du lever de pied partiel. Le lever de pied est détecté comme il a été mentionné en regard de la figure 3 en établissant la différence d'enfoncement de la pédale d'accélérateur x entre les instants k et k-1 et en la comparant à un seuil de relâchement d'enfoncement calibrable Sx.

Si à la fin d'un seuil de durée impartie, référencé St1 à la figure 5, la consigne de pression de suralimentation CP(k) à un instant k n'est pas descendue au-dessous d'un seuil de consigne de pression SCP, alors, il est procédé à l'annulation de la demande de fermeture forcée au moins partielle de la soupape de décharge M0.

Le seuil de consigne de pression SCP peut être calibré à la valeur de la pression de suralimentation naturelle. Le seuil de durée St1 peut être calibré en fonction du temps de réponse de la pédale d'accélérateur.

La figure 6 illustre le cas de conduite suivant une détection d'un lever de pied partiel qui a été précédemment référencé 5a à la figure 4. La demande de fermeture de la soupape de décharge M1 est effectuée à la détection du lever de pied partiel. A la fin d'une durée égale au seuil St1, une demande d'annulation de la fermeture de la soupape de décharge M0 est émise car la consigne de pression de suralimentation CP n'est pas descendue au-dessous du seuil de consigne de pression SCP. La durée de la fermeture de la soupape de décharge a alors été brève, de l'ordre du temps de réponse de la pédale d'accélération et est négligeable par rapport au temps de réponse du moteur.

La figure 7 montre un mode de réalisation dans lequel il est procédé lors d'une détection d'une accélération après un lever de pied complet à l'annulation de la commande de fermeture au moins partielle de la soupape de décharge. L'accélération est détectée en se basant sur la différence entre la consigne de pression de suralimentation CP(k) et CP(k-1) respectivement aux instants k et k-1 successifs de mesure.

Si cet écart est supérieur à un certain seuil de pression SCP 1 calibrable, alors une demande d'annulation de la fermeture de la soupape de décharge M0 est émise. Cette commutation peut être adoucie afin de ne pas créer des changements brutaux de la consigne de position de la soupape de décharge. On peut également retarder la mise à zéro pour améliorer la continuité de la consigne de position de la soupape de décharge.

Sur la figure 8, un cas est matérialisé par une variation faible de la consigne de pression de suralimentation CP avec une réaccélération faible après la décélération. Il est alors procédé à une demande d'annulation de la fermeture de la soupape de décharge M0.

Ainsi, pour un lever de pied complet 5b, 5c, il est établi une différence entre les consignes de pression de suralimentation CPk et CPk-1 respectivement aux instants k et k-1. Si cette différence est supérieure à un seuil de pression SCP1 prédéterminé et calibrable après un troisième seuil de durée St3 alors la commande de fermeture au moins partielle de la soupape de décharge est annulée. Le seuil de durée St3 peut être choisi de telle sorte que la demande d'une consigne de pression CPk supérieure à une dernière valeur de la consigne de pression de suralimentation, référencée CPf à la figure 9, soit privilégiée si elle a lieu. Ceci sera mieux expliqué en regard de la figure 9.

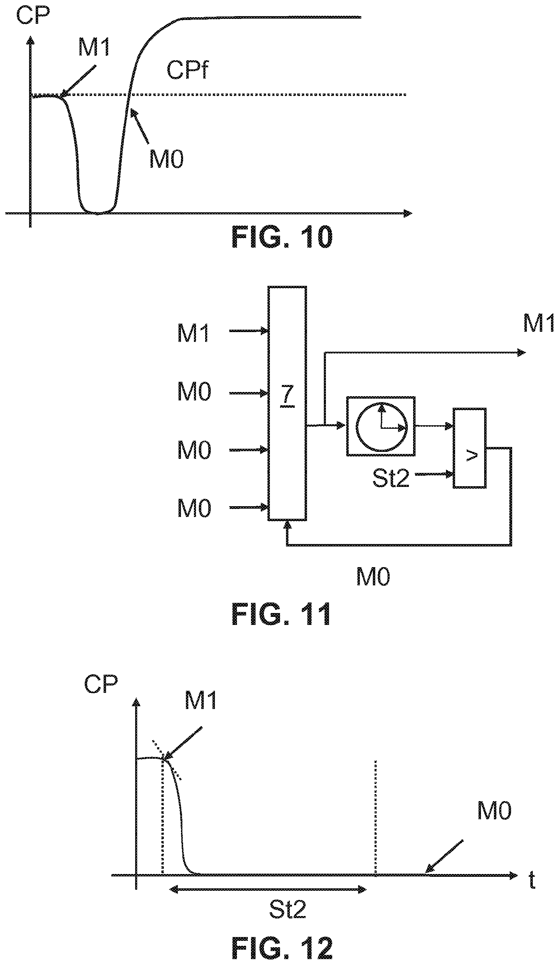

Les figures 9 et 10 montrent le cas de conduite avec lever de pied complet suivi d'une réaccélération franche. A la détection du lever de pied, il est sauvegardé la dernière valeur de la consigne de pression de suralimentation CPf. Si à la prochaine accélération, il est demandé une consigne de pression CP supérieure à la dernière valeur de la consigne de pression de suralimentation CPf, la demande de fermeture forcée au moins partielle est annulée dès que la consigne croise la dernière valeur de consigne de pression CPf sauvegardée.

Ce cas de conduite est similaire au précédent qui illustrait le cas d'une accélération faible. Cependant, on optimise mieux la demande d'annulation de la fermeture au moins partielle M0 émise par le module de gestion. Ceci permet de tirer le maximum de bénéfice du procédé de commande selon la présente invention. C'est un des cas de vie où il est le plus intéressant de forcer la fermeture au moins partielle de la soupape de décharge.

Il va maintenant être traité du cas d'un lever de pied complet non suivi immédiatement d'une réaccélération. Un lever complet de pied se prête en effet à plusieurs situations totalement différentes et le lever de pied n'est pas toujours suivi d'une accélération. C'est le cas, par exemple, d'un arrêt complet du véhicule, d'un ralentissement ou d'un freinage prolongé du véhicule, situations qui entraînent un lever de pied non suivi d'une accélération immédiate.

Comme il est montré aux figures 11 et 12 et notamment à la figure 12, il peut être demandé la fermeture forcée au moins partielle de la soupape de décharge pendant un certain temps égal à un deuxième seuil de durée St2. Ce deuxième de durée St2 est calibré en étant supérieur au seuil de durée St1 mentionné en regard de la figure 5. Lorsque ce deuxième seuil de durée St2 est dépassé, la demande de fermeture forcée au moins partielle de la soupape de décharge est annulée.

Ce cas constitue aussi une sécurisation du procédé de commande selon la présente invention permettant d'annuler la demande de fermeture forcée au moins partielle et ainsi d'ouvrir la soupape de décharge. Au dépassement du deuxième seuil de durée St2, il est considéré que le conducteur n'a pas l'intention de procéder à une accélération. En plus, l'énergie récupérée par la turbine est désormais perdue par les frottements et l'inertie du turbocompresseur.

A la figure 11, il est représenté un bloc du module de gestion de fermeture forcée au moins partielle de la soupape de décharge en levers de pieds. Le module de gestion comporte une mémoire 7 dans laquelle il est mémorisé des détections de levers de pied avec demande de fermeture forcée au moins partielle M1 de la soupape de décharge, des demandes d'annulation de la fermeture forcée au moins partielle M0 de la soupape de décharge dans le cas de levers de pied complets suivis ou non immédiatement d'une accélération et de levers de pied partiels.

Ces levers de pied complets ou partiels entraînent tout d'abord une demande de fermeture forcée au moins partielle de la soupape de décharge et une annulation de la demande, par exemple dans le cas illustré après dépassement du deuxième seuil de durée St2, annulation qui est mémorisée dans la mémoire 7 du module de gestion.

Dans le cadre de l'invention, il aurait pu être possible de détecter différemment les levers de pied, ceci en fonction de la consigne de pression de suralimentation à la place du relâchement d'enfoncement de la pédale d'accélérateur. De plus, il aurait pu être possible de détecter différemment des situations de vie pour lesquelles il n'est pas nécessaire de forcer la fermeture au moins partiellement la soupape de décharge. Cela aurait pu se faire en exploitant la position de la pédale d'accélération à la place de la consigne de pression de suralimentation.

En se référant à toutes les figures, la présente invention concerne un dispositif pour la mise en oeuvre d'un procédé de commande tel que précédemment décrit et un ensemble de pilotage d'au moins un turbocompresseur présentant un régulateur de suralimentation pilotant la soupape de décharge intégrant un tel dispositif.

Le dispositif comprend un module de détection 1 des levers de pied 5a, 5b, 5c du conducteur de la pédale d'accélérateur avec classification des différents levers de pied 5a, 5b, 5c détectés. Le module de détection 1 est relié à un capteur de position de la pédale d'accélérateur pour cette détection. Le dispositif comprend aussi un module de détermination 2 de différentes situations de conduite du véhicule et un module de gestion 3 de demandes de commande de fermeture forcée au moins partielle de la soupape de décharge suite à un type de lever de pied 5a, 5b, 5c du conducteur.

Le module de gestion 3 qui arbitre entre les différentes situations de conduite du véhicule pour la commande ou l'annulation de la fermeture forcée comprend des moyens de mémorisation 7 au moins du seuil de relâchement Sx d'enfoncement de la pédale d'accélérateur et d'un seuil de consigne CPf pour la consigne de suralimentation CP. Il peut aussi comprendre des moyens de mémorisation des durées respectives écoulées à partir de chaque lever partiel ou complet sans reprise d'un enfoncement de la pédale pour une accélération, ces durées pouvant correspondre aux seuils St1, St2 et St3 ainsi qu'un seuil de pression de consigne à un seuil de pression SCP1 prédéterminé et calibrable.

Dans l'ensemble de pilotage comprenant un tel dispositif, le module de gestion 3 du dispositif présente des moyens de suspension du pilotage du régulateur de suralimentation quand il commande une fermeture forcée au moins partielle de la soupape de décharge et des moyens de rétablissement du pilotage par le régulateur de suralimentation quand il commande une annulation de la fermeture forcée au moins partielle de la soupape de décharge.

L'intérêt de la présente invention réside dans la possibilité d'améliorer l'agrément de la conduite et les performances dynamiques du véhicule en réduisant le temps de réaction du système de suralimentation. Le conducteur aura un meilleur ressenti lors des phases d'accélération et un moteur plus tonique. La solution favorise une conduite sportive et dynamique.

La présente invention présente un intérêt d'amélioration de la réponse du turbocompresseur à la sollicitation du conducteur. Elle permet de réduire les pertes d'énergie du moteur et de l'ensemble lié au turbocompresseur notamment en zone urbaine où les levers de pieds sont fréquents mais aussi en circulation autoroutière ou en montagne.

La présente invention est applicable préférentiellement à tous les moteurs équipés d'un turbocompresseur à géométrie fixe. Elle représente une solution très peu coûteuse pour améliorer la réactivité d'un turbocompresseur. La présente invention peut s'appliquer aussi sur de nouvelles technologies implémentées telles que le compresseur électrique et/ou le compresseur à deux volutes.

L'invention n'est nullement limitée aux modes de réalisation décrits et illustrés qui n'ont été donnés qu'à titre d'exemples.

## Revendications

1. Procédé de commande en fermeture forcée au moins partielle d'une soupape de décharge d'un turbocompresseur d'un moteur thermique d'un véhicule automobile, dans lequel il est détecté des levers de pied (5a, 5b, 5c) du conducteur sur la pédale d'accélérateur classifiés entre, d'une part, des levers partiels inférieurs à un seuil de relâchement (Sx) prédéterminé de la pédale pour lesquels la commande n'est pas effectuée et, d'autre part, des levers partiels (5a) supérieurs audit seuil (Sx) et des levers complets (5b, 5c) pour lesquels la commande de fermeture forcée au moins partielle est effectuée, avec :
- pour les levers partiels (5a) supérieurs audit seuil de relâchement (Sx) et les levers complets (5b, 5c), annulation de la commande de fermeture forcée au moins partielle après une durée respective écoulée à partir de chaque lever partiel ou complet sans reprise d'un enfoncement de la pédale pour une accélération et,
- pour des levers complets (5b) suivis directement d'un enfoncement de la pédale, annulation de la commande de fermeture forcée au moins partielle à un instant (k) pour lequel une consigne de pression de suralimentation (CP) est supérieure à un seuil de consigne (CPf) ou pour lequel une différence entre la consigne de pression (CP(k) - CP(k-1)) entre deux instants successifs (k, k-1) de mesure est supérieure à un seuil de pression (SCP1) prédéterminé et calibrable.

2. Procédé selon la revendication 1, dans lequel la commande de la fermeture forcée au moins partielle de la soupape de décharge s'effectue avec un taux de fermeture de la soupape de décharge qui est fonction de la consigne de pression de suralimentation (CP) et d'un débit du compresseur représentatifs d'un fonctionnement du compresseur hors d'une zone de pompage.

3. Procédé selon la revendication 1 ou 2, dans lequel, pour l'identification et la classification des levers de pied (5a, 5b, 5c) selon le seuil de relâchement (Sx) prédéterminé d'enfoncement de la pédale d'accélérateur, il est détecté un lever de pied complet (5b, 5c) quand la pédale d'accélérateur n'est plus enfoncée et, quand la pédale d'accélérateur est partiellement enfoncée et que la valeur absolue d'une différence d'enfoncement (x(k)-x(k-1)) de la pédale d'accélérateur entre deux instants successifs (k, k-1) de mesure est supérieure au seuil de relâchement (Sx) prédéterminé, il est détecté un lever de pied partiel (5a) pour lequel la commande de fermeture forcée au moins partielle est effectuée.

4. Procédé selon la revendication 3, dans lequel le seuil de relâchement (Sx) prédéterminé d'enfoncement est compris entre 2 à 5% de relâchement entre deux instants successifs de mesure.

5. Procédé selon les revendications 3 ou 4, dans lequel, pour un lever de pied partiel (5a) supérieur audit seuil de relâchement (Sx), la commande de fermeture au moins partielle de la soupape de décharge est annulée quand, à un instant (k) après la fin d'un premier seuil de durée (St1), une consigne de pression de suralimentation (CP) n'est pas descendue au-dessous d'un seuil de consigne de pression (SCP).

6. Procédé selon la revendication 5, dans lequel, pour un lever de pied complet (5b, 5c), la commande de fermeture au moins partielle de la soupape de décharge est annulée quand, à un instant après la fin d'un deuxième seuil de durée (St2) prédéterminé, la consigne de pression de suralimentation (CP) n'est pas descendue au-dessous d'un seuil de consigne de pression (SCP), le deuxième seuil de durée (St2) étant supérieur au premier seuil de durée (St1).

7. Procédé selon la revendication 3 ou 4, dans lequel, pour un levier de pied complet (5b, 5c), il est sauvegardé une dernière valeur d'une consigne de pression de suralimentation (CPf) et, si à la prochaine accélération à un instant (k), il est demandé une consigne de pression (CP(k)) supérieure à la dernière valeur de la consigne de pression de suralimentation (CPf), alors la commande de fermeture au moins partielle de la soupape de décharge est annulée.

8. Procédé selon la revendication 7, dans lequel, pour un lever de pied complet (5b, 5c), il est établi une différence entre les consignes de pression de suralimentation (CP(k) et CP(k-1)) respectivement à des instants successifs (k et k-1) et si cette différence est supérieure à un seuil de pression (SCP1) prédéterminé et calibrable après écoulement d'un troisième seuil de durée (St3), alors la commande de fermeture au moins partielle de la soupape de décharge est annulée, le troisième seuil de durée (St3) étant choisi de telle sorte que la demande d'une consigne de pression (CP(k)) supérieure à la dernière valeur de la consigne de pression de suralimentation (CPf) soit privilégiée si elle a lieu.

9. Dispositif comprenant des moyens pour la mise en oeuvre de toutes les étapes d'un procédé de commande selon l'une quelconque des revendications précédentes, lequel comprend un module de détection (1) des levers de pied (5a, 5b, 5c) du conducteur de la pédale d'accélérateur avec classification des différents levers de pied (5a, 5b, 5c) détectés, le module de détection (1) étant relié à un capteur de position (6) de la pédale d'accélérateur pour cette détection, un module de détermination (2) de différentes situations de conduite du véhicule et un module de gestion (3) de demandes de commande de fermeture forcée au moins partielle de la soupape de décharge suite à un type de lever de pied (5a, 5b, 5c) du conducteur, le module de gestion (3) arbitrant entre les différentes situations de conduite du véhicule pour la commande ou l'annulation de la fermeture forcée, le module de gestion (3) comprenant des moyens de mémorisation (7) au moins du seuil de relâchement (Sx) d'enfoncement de la pédale d'accélérateur et d'un seuil de consigne (CPf) pour la consigne de suralimentation (CP).

10. Ensemble de pilotage d'au moins un turbocompresseur présentant un régulateur de suralimentation pilotant la soupape de décharge, **caractérisé en ce qu'**il comprend un dispositif selon la revendication 9, le module de gestion (3) du dispositif présentant des moyens de suspension du pilotage du régulateur de suralimentation quand il commande une fermeture forcée au moins partielle de la soupape de décharge et des moyens de rétablissement du pilotage par le régulateur de suralimentation quand il commande une annulation de la fermeture forcée au moins partielle de la soupape de décharge.

## Patentansprüche

1. Steuerverfahren zur mindestens teilweisen erzwungenen Schließung eines Wastegate-Ventils eines Turbokompressors eines Turbomotors eines Kraftfahrzeugs, wobei Fußanhebungen (5a, 5b, 5c) des Fahrers auf dem Gaspedal erfasst werden, die einerseits als teilweise Anhebungen, die kleiner sind als ein vorbestimmter Freigabeschwellenwert (Sx) des Pedal eingestuft sind, für die die Steuerung nicht ausgeführt wird, und andererseits teilweise Anhebungen (5a), die größer sind als der Schwellenwert (Sx), und vollständige Anhebungen (5b, 5c), für die das mindestens teilweise erzwungene Schließungssteuern ausgeführt wird, mit:
- für die teilweisen Anhebungen (5a), die größer sind als der Freigabeschwellenwert (Sx), und die vollständigen Anhebungen (5b, 5c), Annullierung der mindestens teilweisen erzwungenen Schließsteuerung nach einer jeweiligen Dauer, die ausgehend von dem teilweisen oder vollständigen Anheben ohne Wiederaufnahme eines Eindrückens des Gaspedals für eine Beschleunigung verstreicht, und
- für vollständige Anhebungen (5b), auf die direkt ein Eindrücken des Pedals folgt, Annullierung der mindestens teilweisen erzwungenen Schließsteuerung in einem Augenblick (k), für den ein Aufladedrucksollwert (CP) größer ist als ein Schwellensollwert (CPf) oder für den ein Unterschied zwischen dem Drucksollwert (CP(k)-CP(k-1) zwischen zwei aufeinanderfolgenden Messaugenblicken (k, k-1) größer ist als ein vorbestimmter und kalibrierbare Druckschwellenwert (SCP1).

2. Verfahren nach Anspruch 1, wobei die mindestens teilweise erzwungene Schließung des Wastegate-Ventils mit einer Schließrate des Wastegate-Ventils erfolgt, die von dem Aufladedrucksollwert (CP) und einem Durchsatz des Kompressors abhängt, die für einen Betrieb des Kompressors außerhalb einer Pumpzone repräsentativ sind.

3. Verfahren nach Anspruch 1 oder 2, wobei zur Identifikation und Klassifizierung der Fußanhebungen (5a, 5b, 5c) gemäß dem vorbestimmten Freigabeschwellenwert (Sx) des Eindrückens des Gaspedals eine vollständige Fußanhebung (5b, 5c) erfasst wird, wenn das Gaspedal nicht mehr eingedrückt wird, und, wenn das Gaspedal teilweise eingedrückt wird und der Absolutwert eines Eindrückunterschieds (x(k)-x(k-1) des Gaspedals zwischen zwei aufeinanderfolgenden Messaugenblicken (k, k-1) größer ist als der vorbestimmte Freigabeschwellenwert (Sx), eine teilweise Fußanhebung (5a) erfasst wird, für die die mindestens teilweise erzwungene Schließungssteuerung ausgeführt wird.

4. Verfahren nach Anspruch 3, wobei der vorbestimmte Eindrück-Freigabeschwellenwert (Sx) zwischen 2 bis 5 % Freigabe zwischen zwei aufeinanderfolgenden Messaugenblicken beträgt.

5. Verfahren nach den Ansprüchen 3 oder 4, wobei für eine teilweise Fußanhebung (5a), die größer ist als der Freigabeschwellenwert (Sx), die mindestens teilweise Schließungssteuerung des Wastegate-Ventils annulliert wird, wenn in einem Augenblick (k) nach dem Ende der ersten Schwellendauer (St1) ein Aufladedrucksollwert (CP) nicht unter einen Drucksollschwellenwert (SCP) gesunken ist.

6. Verfahren nach Anspruch 5, wobei, für eine vollständige Fußanhebung (5b, 5c) die mindestens teilweise Schließungssteuerung des Wastegates annulliert wird, wenn in einem Augenblick nach dem Ende einer zweiten vorbestimmten Schwellendauer (St2) der Aufladedrucksollwert (CP) nicht unter einen Drucksollschwellenwert (SCP) gesunken ist, wobei die zweite Schwellendauer (St2) größer ist als die erste Schwellendauer (St1).

7. Verfahren nach Anspruch 3 oder 4, wobei für eine vollständige Fußanhebung (5b, 5c) ein letzter Wert eines Aufladedrucksollwerts (CPf) gespeichert wird, und, falls bei der nächsten Beschleunigung in einem Augenblick (k) ein Drucksollwert (CP(k)) gefordert wird, der größer ist als der letzte Aufladedrucksollwert (CPf), die mindestens teilweise Schließungssteuerung des Wastegates annulliert wird.

8. Verfahren nach Anspruch 7, wobei für eine vollständige Fußanhebung (5b, 5c) ein Unterschied zwischen den Aufladesollwertdrücken (CP(k) und CP(k-1)) jeweils in aufeinanderfolgenden Augenblicken (k und k-1) erhoben wird, und, falls dieser Unterschied nach Verstreichen einer dritten Schwellendauer (St3) größer ist als ein vorbestimmter und kalibrierbare Druckschwellenwert (SCP1), die mindestens teilweise Schließungssteuerung des Wastegates annulliert wird, wobei die dritte Schwellendauer (St3) derart ausgewählt wird, dass die Anfrage um einen Druckschwellenwert (CP(k)) größer als der letzte Aufladedruckschwellenwert (CPf) privilegiert wird, falls sie stattfindet.

9. Vorrichtung, die Mittel für die Umsetzung aller Schritte eines Steuerungsverfahrens nach einem der vorstehenden Ansprüche umfasst, die ein Erfassungsmodul (1) der Fußanhebungen (5a, 5b, 5c) des Fahrers des Gaspedals mit Einstufung der unterschiedlichen erfassten Fußanhebungen (5a, 5b, 5c) umfasst, wobei das Erfassungsmodul (1) mit einem Positionssensor (6) des Gaspedals für diese Erfassung, einem Bestimmungsmodul (2) unterschiedlicher Fahrsituationen des Fahrzeugs und einem Verwaltungsmodul (3) mindestens teilweiser erzwungener Steuerungsanfragen des Wastegate-Ventils im Anschluss an einen Typ von Fußanhebung (5a, 5b, 5c) des Fahrers verbunden ist, wobei das Verwaltungsmodul (3) zwischen den unterschiedlichen Fahrsituationen des Fahrzeugs für die Steuerung oder die Annullierung der erzwungenen Schließung entscheidet, wobei das Verwaltungsmodul (3) Mittel zum Speichern (7) mindestens eines Eindrück-Freigabeschwellenwerts (Sx) und eines Sollschwellenwerts (CPf) für den Aufladesollwert (CP) umfasst.

10. Steuereinheit mindestens eines Turbokompressors, der das Wastegate-Ventil steuert, **dadurch gekennzeichnet, dass** sie eine Vorrichtung nach Anspruch 9 umfasst, wobei das Verwaltungsmodul (3) der Vorrichtung Mittel zur Aufhebung der Steuerung des Aufladereglers umfasst, wenn er eine mindestens teilweise erzwungene Schließung des Wastegate-Ventils steuert, und Mittel zum Wiederherstellen der Steuerung durch den Aufladeregler, wenn er eine Annullierung der mindestens teilweisen erzwungenen Schließung des Wastegate-Ventils steuert.

## Claims

1. A method for controlling the at least partial forced closure of a waste gate valve of a turbocharger of a heat engine of a motor vehicle, in which there is detection of the throttle releases (5a, 5b, 5c) of the driver on the accelerator pedal, classified between, on the one hand, partial throttle releases lower than a predetermined release threshold (Sx) of the pedal for which the control is not carried out and, on the other hand, partial throttle releases (5a) higher than said threshold (Sx), and full throttle releases (5b, 5c) for which the at least partial forced closure control is carried out, with:
- for the partial throttle releases (5a) higher than said release threshold (Sx) and the full throttle releases (5b, 5c), cancellation of the at least partial forced closure command after a respective duration has passed from each partial or full throttle release without resumption of a depression of the pedal for an acceleration and,
- for full throttle releases (5b) followed directly by a depression of the pedal, cancellation of the at least partial forced closure control at an instant (k) for which a boost pressure setpoint (CP) is higher than a setpoint threshold (CPf) or for which a difference between the pressure setpoint (CP(k) - CP(k-1)) between successive instants (k, k-1) of measurement is higher than a predetermined and calibratable pressure threshold (SCP1).

2. The method according to Claim 1, in which the at least partial forced closure control of the waste gate valve is carried out with a closure rate of the waste gate valve which is a function of the boost pressure setpoint (CP) and a flow rate of the compressor which are representative of a functioning of the compressor outside a pumping zone.

3. The method according to Claim 1 or 2, in which, for the identification and the classification of the throttle releases (5a, 5b, 5c) according to the predetermined release threshold (Sx) of depression of the accelerator pedal, a full throttle release (5b, 5c) is detected when the accelerator pedal is no longer depressed and, when the accelerator pedal is partially depressed and the absolute value of a difference of depression (x(k)-x(k-1)) of the accelerator pedal between two successive instants (k, k-1) of measurement is higher than the predetermined release threshold (Sx), a partial throttle release (5a) is detected, for which the at least partial forced closure control is carried out.

4. The method according to Claim 3, in which the predetermined release threshold (Sx) of depression is comprised between 2 to 5% of release between two successive measurement instants.

5. The method according to Claims 3 or 4, in which, for a partial throttle release (5a) higher than said release threshold (Sx), the at least partial closure control of the waste gate valve is cancelled when, at an instant (k) after the end of a first threshold of duration (St1), a boost pressure setpoint (CP) has not fallen below a pressure setpoint threshold (SCP).

6. The method according to Claim 5, in which, for a full throttle release (5b, 5c), the at least partial closure control of the waste gate valve is cancelled when, at an instant after the end of a second predetermined duration threshold (St2), the boost pressure setpoint (CP) has not fallen below a pressure setpoint threshold (SCP), the second duration threshold (St2) being higher than the first duration threshold (St1).

7. The method according to Claim 3 or 4, in which, for a full throttle release (5b, 5c), a last value of a boost pressure setpoint (CPf) is saved and, if at the next acceleration at an instant (k) a pressure setpoint (CP(k)) is requested which is higher than the last value of the boost pressure setpoint (CPf), the control of at least partial closure of the waste gate valve is cancelled.

8. The method according to Claim 7, in which, for a full throttle release (5b,5c) a difference is established between the boost pressure setpoints (CP(k) and CP(k-1)) respectively at successive instants (k and k-1) and if this difference is higher than a predetermined and calibratable pressure threshold (SCP1) after a third duration threshold (St3) has elapsed, the at least partial closure control of the waste gate valve is cancelled, the third duration threshold (St3) being selected such that the request of a pressure setpoint (CP(k)) which is higher than the last value of the boost pressure setpoint (CPf) is given priority, if it has taken place.

9. A device including means for the implementation of all the steps of a control method according to any one of the preceding claims, which includes a detection module (1) of the throttle releases (5a, 5b, 5c) of the driver of the accelerator pedal with classification of the different detected throttle releases (5a, 5b, 5c), the detection module (1) being connected to a position sensor (6) of the accelerator pedal for this detection, a module (2) for determining different driving situations of the vehicle, and a management module (3) of control requests of at least partial forced closure of the waste gate valve following a type of throttle release (5, 5b, 5c) of the driver, the management module (3) judging between the different driving situations of the vehicle for the controlling or the cancelling of the forced closure, the management module (3) including storage means (7) at least of the release threshold (Sx) of depression of the accelerator pedal and of a setpoint threshold (CPf) for the boost setpoint (CP).

10. A drive assembly of at least one turbocharger having a boost regulator driving the waste gate valve, **characterized in that** it includes a device according to Claim 9, the management module (3) of the device having means for suspension of the drive of the boost regulator when it controls an at least partial forced closure of the waste gate valve and means for reestablishing the drive by the boost regulator when it controls a cancellation of the at least partial forced closure of the waste gate valve.
